# EUROPEAN PATENT APPLICATION

(11) **EP 4 593 258 A1**
(43) Date of publication of application: **30.07.2025**
(21) Application number: 25151791.8
(22) Date of filing: 14.01.2025
(51) Int. Cl.: H02K 1/28, H02K 7/00

(54) **ROTOR OF ELECTRIC MOTOR AND MANUFACTURING METHOD THEREOF**

(30) Priority: 24.01.2024 JP 2024008708
(71) Applicant: TOYOTA JIDOSHA KABUSHIKI KAISHA, Aichi-ken, 471-8571 (JP)
(72) Inventor: NODA, Ken, Toyota-shi, 471-8571 (JP); IMAKAWA, Takashi, Toyota-shi, 471-8571 (JP); ONO, Ryo, Toyota-shi, 471-8571 (JP); OHIRA, Kengo, Toyota-shi, 471-8571 (JP); AIZAWA, Keita, Toyota-shi, 471-8571 (JP); YOSHIKAWA, Makoto, Toyota-shi, 471-8571 (JP); TAKAMURA, Yasuyuki, Toyota-shi, 471-8571 (JP); TOMONAGA, Takeshi, Toyota-shi, 471-8571 (JP); KAWASAKI, Shunsuke, Toyota-shi, 471-8571 (JP)
(74) Representative: J A Kemp LLP

(57) **Abstract**

A rotor of an electric motor includes a shaft (10), a rotor core (12) fixed to an outer peripheral surface of the shaft (10), and a first end plate (14) fixed to the outer peripheral surface of the shaft (10) and abutting an end face of the rotor core (12). The outer peripheral surface of the shaft (10) includes a first outer peripheral surface abutting an inner peripheral surface of the rotor core (12), a second outer peripheral surface located on a first axial side with respect to the first outer peripheral surface and having a diameter larger than a diameter of the first outer peripheral surface, and a first inclined surface located between the first outer peripheral surface and the second outer peripheral surface and abutting an inner peripheral surface of the first end plate (14). The first inclined surface has a diameter increasing from the first outer peripheral surface toward the second outer peripheral surface.

## Description

### BACKGROUND OF THE INVENTION

### 1. Field of the Invention

The technology disclosed in the present specification relates to a rotor of an electric motor and a manufacturing method thereof.

### 2. Description of Related Art

Japanese Unexamined Patent Application Publication No. 2008-109804 (JP 2008-109804 A) discloses a rotor of an electric motor. The rotor includes a shaft extending in an axial direction, a rotor core fixed to an outer peripheral surface of the shaft, an end plate fixed to the outer peripheral surface of the shaft and abutting an end face of the rotor core on a first axial side, and an anti-rotation member fixed to the outer peripheral surface of the shaft and abutting an end face of the end plate on the first axial side.

### SUMMARY OF THE INVENTION

In the rotor of JP 2008-109804 A, the anti-rotation member abuts the end face of the end plate on the first axial side, thereby generating a frictional force between the anti-rotation member and the end plate. The end plate is fixed to the shaft and the rotor core by the frictional force. There is a demand for a technology capable of simplifying a structure for fixing the end plate to the shaft and the rotor core.

The present specification provides a technology capable of simplifying a structure for fixing an end plate to a shaft and a rotor core.

A first aspect of the present technology relates to a rotor of an electric motor. The rotor may include a shaft, a rotor core, and a first end plate. The shaft may extend in an axial direction. The rotor core may be fixed to an outer peripheral surface of the shaft. The first end plate may be fixed to the outer peripheral surface of the shaft and abut an end face of the rotor core on a first axial side. The outer peripheral surface of the shaft may include a first outer peripheral surface abutting an inner peripheral surface of the rotor core, a second outer peripheral surface located on the first axial side with respect to the first outer peripheral surface and having a diameter larger than a diameter of the first outer peripheral surface, and a first inclined surface located between the first outer peripheral surface and the second outer peripheral surface in the axial direction and abutting an inner peripheral surface of the first end plate. The first inclined surface may have a diameter increasing from the first outer peripheral surface toward the second outer peripheral surface.

According to the above aspect, not solely a radial restoring force (reaction force) but also an axial restoring force toward the rotor core (that is, a second axial side) acts on the first end plate from the first inclined surface of the shaft. Consequently, the first end plate can firmly hold the rotor core from the first axial side. In this manner, the end plate can be fixed to the shaft and the rotor core by using the first inclined surface of the shaft. Therefore, the structure for fixing the end plate to the shaft and the rotor core can be simplified.

According to a second aspect, in the first aspect, the shaft may be elastically deformed radially inward at least at the first inclined surface, and a restoring force caused by the elastic deformation may act on the first end plate. In other words, the first end plate may be fitted to the shaft with an interference fit.

According to the above aspect, the restoring force acting on the first end plate from the first inclined surface of the shaft or a frictional force caused by the restoring force can be increased. Although this is an example, the above configuration can be realized through shrink fitting, cooling fitting, press fitting, or the like.

According to a third aspect, in the second aspect, the first end plate may be elastically deformed radially outward at least at the inner peripheral surface abutting the first inclined surface, and an amount of the elastic deformation of the first end plate may increase as a distance from the rotor core increases.

According to the above aspect, in the first end plate, the restoring force on the second axial side is larger than a restoring force on the first axial side. Therefore, the first end plate can firmly hold the rotor core from the first axial side.

According to a fourth aspect, in any one of the first to third aspects, a diameter of an outer peripheral surface of the first end plate may be larger than a diameter of an outer peripheral surface of the rotor core, or equal to the diameter of the outer peripheral surface of the rotor core.

According to the above aspect, the first end plate can firmly hold the rotor core from the first axial side up to a radially outer end portion of the rotor core.

According to a fifth aspect, in any one of the first to fourth aspects, an end edge of the inner peripheral surface of the first end plate on the first axial side may be located on the first inclined surface of the shaft. Here, "on the first inclined surface" includes a boundary between the first inclined surface and the second outer peripheral surface.

According to the above aspect, the restoring force acting on the first end plate from the first inclined surface of the shaft or the frictional force caused by the restoring force can be increased as compared with a configuration in which the end edge of the inner peripheral surface of the first end plate on the first axial side is located on the second outer peripheral surface beyond the first inclined surface of the shaft.

According to a sixth aspect, in the fifth aspect, the end edge of the inner peripheral surface of the first end plate on the first axial side may be located on a boundary between the second outer peripheral surface and the first inclined surface of the shaft.

According to the above aspect, an area of the inner peripheral surface of the first end plate that is in contact with the first inclined surface of the shaft can be increased. As a result, the restoring force acting on the first end plate from the first inclined surface of the shaft or the frictional force caused by the restoring force can be increased.

According to a seventh aspect, in the sixth aspect, an axial dimension of the inner peripheral surface of the first end plate may be equal to an axial dimension of the first inclined surface of the shaft.

According to the above aspect, the area of the inner peripheral surface of the first end plate that is in contact with the first inclined surface of the shaft can be maximized.

According to an eighth aspect, in any one of the first to seventh aspects, the rotor may further include a second end plate fixed to the outer peripheral surface of the shaft and abutting an end face of the rotor core on the second axial side. The outer peripheral surface of the shaft may include a third outer peripheral surface located on the second axial side with respect to the first outer peripheral surface and having a diameter larger than the diameter of the first outer peripheral surface, and a second inclined surface located between the first outer peripheral surface and the third outer peripheral surface in the axial direction and abutting an inner peripheral surface of the second end plate. The second inclined surface may have a diameter increasing from the first outer peripheral surface toward the third outer peripheral surface.

According to the above aspect, not solely a radial restoring force (reaction force) but also an axial restoring force toward the rotor core (that is, the first axial side) acts on the second end plate from the second inclined surface of the shaft. Consequently, the second end plate can firmly hold the rotor core from the second axial side. That is, the rotor core is firmly held by both the first end plate and the second end plate from both axial sides.

A ninth aspect of the present technology relates to a manufacturing method of a rotor of an electric motor. The rotor may include a shaft extending in an axial direction, a rotor core fixed to an outer peripheral surface of the shaft, and a first end plate fixed to the outer peripheral surface of the shaft and abutting an end face of the rotor core on a first axial side. The outer peripheral surface of the shaft may include a first outer peripheral surface, a second outer peripheral surface located on the first axial side with respect to the first outer peripheral surface and having a diameter larger than a diameter of the first outer peripheral surface, and a first inclined surface located between the first outer peripheral surface and the second outer peripheral surface in the axial direction and having a diameter increasing from the first outer peripheral surface toward the second outer peripheral surface. The manufacturing method may include temporarily expanding an inner peripheral surface of the rotor core radially outward and fixing the rotor core to the first outer peripheral surface of the shaft, and temporarily expanding an inner peripheral surface of the first end plate radially outward and fixing the first end plate to the first inclined surface of the shaft.

According to the above aspect, the first end plate can be fitted to the shaft with an interference fit. Consequently, the restoring force (reaction force) acting on the first end plate from the first inclined surface of the shaft or the frictional force caused by the restoring force can be increased. In particular, not solely the radial restoring force but also the axial restoring force toward the rotor core (that is, the second axial side) acts on the first end plate from the first inclined surface of the shaft. Therefore, the first end plate can firmly hold the rotor core from the first axial side.

According to a tenth aspect, in the ninth aspect, fixing the first end plate may be performed after fixing the rotor core.

According to the above aspect, various parameters can be appropriately set in each of fixing the first end plate and fixing the rotor core.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a cross-sectional view of a rotor 2;
FIG. 2 is an enlarged view of a part of the rotor 2 of FIG. 1;
FIG. 3 is a diagram showing a process of fitting the rotor 2 to a shaft 10 in a manufacturing method of the rotor 2; and
FIG. 4 is a diagram showing a process of fitting a left end plate 14 and a right end plate 16 to the shaft 10 in the manufacturing method of the rotor 2.

### DETAILED DESCRIPTION OF EMBODIMENTS

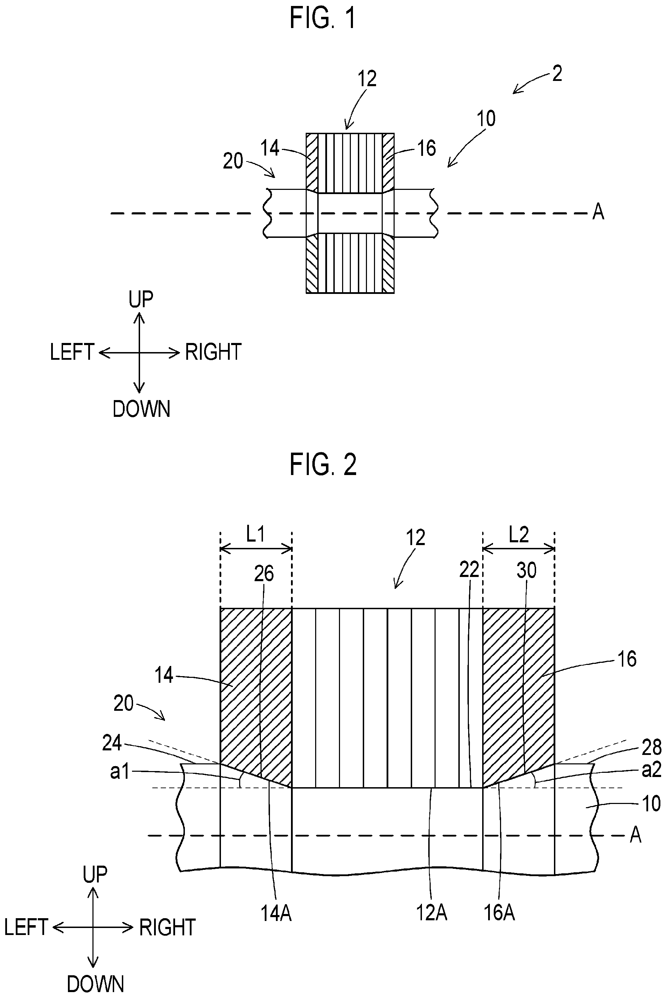

The rotor 2 will be described with reference to FIGS. 1 and 2. The rotor 2 is a rotor of an electric motor mounted on an electrified vehicle or the like. An up-down direction and a right-left direction in each drawing are provided for ease of understanding in the description and do not define actual directions.

As shown in FIG. 1, the rotor 2 includes a shaft 10 extending in a direction of an axis A, a rotor core 12, a left end plate 14, and a right end plate 16. The direction of the axis A is parallel to the right-left direction. As shown in FIG. 2, the shaft 10 includes an outer peripheral surface 20 including a first outer peripheral surface 22, a second outer peripheral surface 24, a first inclined surface 26, a third outer peripheral surface 28, and a second inclined surface 30. Diameters of the second outer peripheral surface 24 and the third outer peripheral surface 28 are each larger than a diameter of the first outer peripheral surface 22. The diameter of the second outer peripheral surface 24 and the diameter of the third outer peripheral surface 28 are equal. In a modification example, the diameter of the second outer peripheral surface 24 and the diameter of the third outer peripheral surface 28 may be different. The second outer peripheral surface 24 is disposed on the left side with respect to the first outer peripheral surface 22. The first inclined surface 26 is located between the first outer peripheral surface 22 and the second outer peripheral surface 24 in the direction of the axis A and connects the first outer peripheral surface 22 and the second outer peripheral surface 24. The first inclined surface 26 has a diameter increasing from the first outer peripheral surface 22 toward the second outer peripheral surface 24. That is, the first inclined surface 26 has a diameter increasing from the right side toward the left side. As an example, an inclination angle a1 of the first inclined surface 26 with respect to the direction of the axis A is 0.1° to 10°. The third outer peripheral surface 28 is disposed on the right side with respect to the first outer peripheral surface 22. The second inclined surface 30 is located between the first outer peripheral surface 22 and the third outer peripheral surface 28 in the direction of the axis A and connects the first outer peripheral surface 22 and the third outer peripheral surface 28. The second inclined surface 30 has a diameter increasing from the first outer peripheral surface 22 toward the third outer peripheral surface 28. That is, the second inclined surface 30 has a diameter increasing from the left side toward the right side. As an example, an inclination angle a2 of the second inclined surface 30 with respect to the direction of the axis A is 0.1° to 10°. In the present embodiment, the inclination angle a2 is equal to the inclination angle a1. In a modification example, the inclination angle a1 and the inclination angle a2 may be different.

The rotor core 12 is configured by stacking a plurality of electromagnetic steel sheets having the same shape in the direction of the axis A. The rotor core 12 includes an inner peripheral surface 12A that abuts the first outer peripheral surface 22 of the shaft 10. The rotor core 12 is fixed to the shaft 10 by shrink fitting.

The left end plate 14 and the right end plate 16 are each disk-shaped with a through-hole provided at the center. The left end plate 14 and the right end plate 16 are fixed to the shaft 10 by shrink fitting. The right end plate 16 has a shape that is right-left symmetrical to the left end plate 14.

The left end plate 14 includes an inner peripheral surface 14A that abuts the first inclined surface 26 of the shaft 10, and a right surface that abuts a left surface of the rotor core 12. That is, the left end plate 14 has an inner diameter increasing from the first outer peripheral surface 22 toward the second outer peripheral surface 24. A diameter of an outer peripheral surface of the left end plate 14 is equal to a diameter of an outer peripheral surface of the rotor core 12. A dimension L1 of the inner peripheral surface 14A of the left end plate 14 in the direction of the axis A is equal to a dimension L1 of the first inclined surface 26 of the shaft 10 in the direction of the axis A. In addition, positions of a right end and a left end of the left end plate 14 coincide with positions of a right end and a left end of the first inclined surface 26, respectively. Therefore, the right end of the left end plate 14 is located on a boundary between the first outer peripheral surface 22 and the first inclined surface 26 of the shaft 10, and the left end of the left end plate 14 is located on a boundary between the first inclined surface 26 and the second outer peripheral surface 24 of the shaft 10. That is, the entire left end plate 14 is located on the first inclined surface 26.

The right end plate 16 includes an inner peripheral surface 16A that abuts the second inclined surface 30 of the shaft 10, and a left surface that abuts a right surface of the rotor core 12. That is, the right end plate 16 has an inner diameter increasing from the first outer peripheral surface 22 toward the third outer peripheral surface 28. A diameter of an outer peripheral surface of the right end plate 16 is equal to the diameter of the outer peripheral surface of the rotor core 12. That is, the diameters of the outer peripheral surfaces of the rotor core 12, the left end plate 14, and the right end plate 16 are equal. A dimension L2 of the inner peripheral surface 16A of the right end plate 16 in the direction of the axis A is equal to a dimension L2 of the second inclined surface 30 of the shaft 10 in the direction of the axis A. The dimension L2 of the second inclined surface 30 of the shaft 10 in the direction of the axis A is equal to the dimension L1 of the first inclined surface 26 in the direction of the axis A. Therefore, the dimensions L1, L2 of the first inclined surface 26 and the second inclined surface 30 of the shaft 10, the inner peripheral surface 14A of the left end plate 14, and the inner peripheral surface 16A of the right end plate 16 in the direction of the axis A are equal. In addition, positions of a left end and a right end of the right end plate 16 coincide with positions of a left end and a right end of the second inclined surface 30, respectively. Therefore, the left end of the right end plate 16 is located on a boundary between the first outer peripheral surface 22 and the second inclined surface 30 of the shaft 10, and the right end of the right end plate 16 is located on a boundary between the second inclined surface 30 and the third outer peripheral surface 28 of the shaft 10. That is, the entire right end plate 16 is located on the second inclined surface 30.

Although details will be described below, the shaft 10 is elastically deformed radially inward at the first outer peripheral surface 22, the first inclined surface 26, and the second inclined surface 30. Then, a restoring force (reaction force) from the first outer peripheral surface 22, caused by the elastic deformation, acts on the rotor core 12. The rotor core 12 is fixed to the shaft 10 by the restoring force. In addition, a restoring force from the first inclined surface 26, caused by the elastic deformation, acts on the left end plate 14, and a restoring force from the second inclined surface 30, caused by the elastic deformation, acts on the right end plate 16. Among these restoring forces, radial forces become clamping forces, thereby fixing the left end plate 14 and the right end plate 16 to the shaft 10. In addition, among the restoring forces, forces in the direction of the axis A cause the rotor core 12 to be clamped between the left end plate 14 and the right end plate 16. Specifically, frictional forces caused by the forces in the direction of the axis A cause the left end plate 14 and the right end plate 16 to be fixed to the rotor core 12. With such a configuration, the shaft 10, the rotor core 12, the left end plate 14, and the right end plate 16 integrally rotate. A plurality of magnets is provided on an outer peripheral surface of the rotor core 12 in the direction of the axis A. The left end plate 14 and the right end plate 16 are fixed to the rotor core 12, thereby preventing the magnets from falling out in the direction of the axis A.

### Manufacturing Method of Rotor 2

A manufacturing method of the rotor 2 will be described with reference to FIGS. 2 to 4.

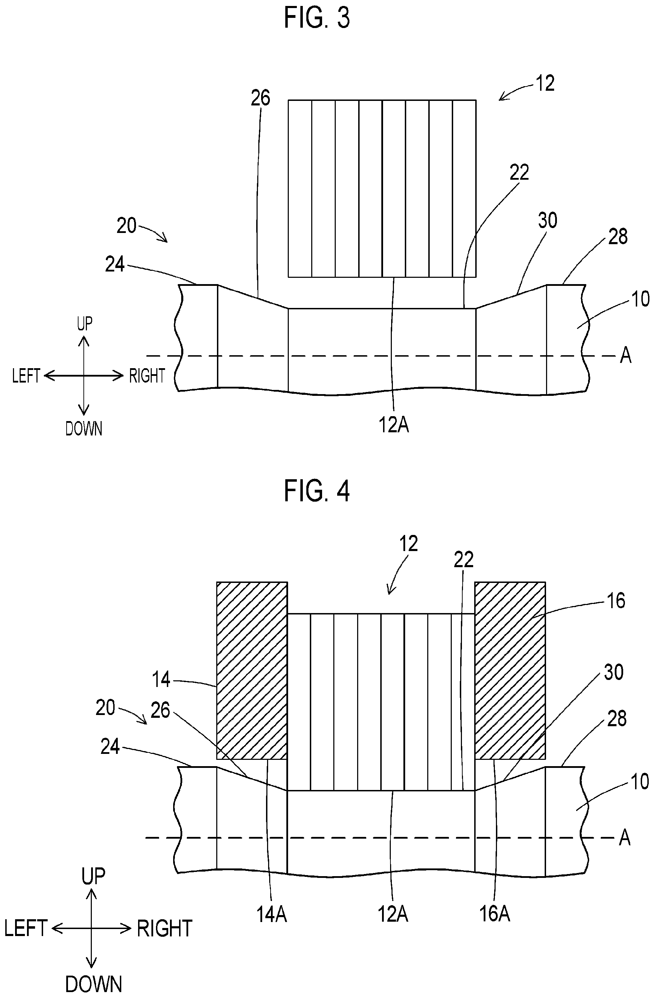

First, as shown in FIG. 3, the rotor core 12 is heated, thereby temporarily expanding the rotor core 12 radially outward. Specifically, an inner diameter of the rotor core 12 is made larger than the diameter of the second outer peripheral surface 24 of the shaft 10. Next, the rotor core 12 is disposed around the first outer peripheral surface 22 of the shaft 10. Next, the rotor core 12 is cooled, thereby contracting the rotor core 12 radially inward. In response to the rotor core 12 contracting radially inward, the first outer peripheral surface 22 of the shaft 10 is elastically deformed radially inward. Then, the restoring force caused by the elastic deformation acts on the rotor core 12. As a result, as shown in FIG. 4, the rotor core 12 is fixed to the shaft 10.

Next, the left end plate 14 and the right end plate 16 are heated, thereby temporarily expanding the left end plate 14 and the right end plate 16 radially outward. Specifically, the inner diameters of the left end plate 14 and the right end plate 16 are each made larger than the diameter of the second outer peripheral surface 24 of the shaft 10. Next, the left end plate 14 is disposed around the first inclined surface 26 of the shaft 10, and the right end plate 16 is disposed around the second inclined surface 30 of the shaft 10. Additionally, the right surface of the left end plate 14 is brought into contact with the left surface of the rotor core 12, and the left surface of the right end plate 16 is brought into contact with the right surface of the rotor core 12. In a state before the left end plate 14 and the right end plate 16 are fixed to the shaft 10, the diameters of the inner peripheral surfaces 14A, 16A of the left end plate 14 and the right end plate 16 are constant in the direction of the axis A. Next, the left end plate 14 and the right end plate 16 are cooled, thereby contracting the left end plate 14 and the right end plate 16 radially inward. In response to the left end plate 14 contracting radially inward, the first inclined surface 26 of the shaft 10 is elastically deformed radially inward. Additionally, the inner peripheral surfaces 14A, 16A of the left end plate 14 and the right end plate 16 are also elastically deformed into shapes corresponding to the first inclined surface 26 and the second inclined surface 30 of the shaft 10, respectively. This is because the stiffness of the left end plate 14 and the right end plate 16 is smaller than the stiffness of the shaft 10. Then, the restoring forces from the first inclined surface 26 and the second inclined surface 30 of the shaft 10, caused by the elastic deformation, act on the left end plate 14 and the right end plate 16, respectively. The restoring forces, such as the radial clamping forces and the frictional forces caused by the forces in the direction of the axis A, cause the left end plate 14 and the right end plate 16 to be fixed to the shaft 10 and the rotor core 12. As is clear from FIGS. 2 and 4, the amount of elastic deformation of the left end plate 14 and the right end plate 16 increases as the distance from the rotor core 12 increases. That is, the amount of elastic deformation of the left end plate 14 is greatest at a left end portion, and the amount of elastic deformation of the right end plate 16 is greatest at a right end portion.

As described above, as shown in FIG. 2, the rotor 2 of the electric motor includes the shaft 10 extending in the direction of the axis A, the rotor core 12 fixed to the outer peripheral surface 20 of the shaft 10, and the left end plate 14 (an example of a "first end plate") fixed to the outer peripheral surface 20 of the shaft 10 and abutting the end face of the rotor core 12 on the left side (an example of a "first axial side"). The outer peripheral surface 20 of the shaft 10 includes the first outer peripheral surface 22 abutting the inner peripheral surface 12A of the rotor core 12, the second outer peripheral surface 24 located on the left side with respect to the first outer peripheral surface 22 and having a diameter larger than the diameter of the first outer peripheral surface 22, and the first inclined surface 26 located between the first outer peripheral surface 22 and the second outer peripheral surface 24 in the direction of the axis A and abutting the inner peripheral surface 14A of the left end plate 14. The first inclined surface 26 has a diameter increasing from the first outer peripheral surface 22 toward the second outer peripheral surface 24.

With the above configuration, not solely the radial restoring force (reaction force) but also the restoring force in the direction of the axis A toward the rotor core 12 (that is, the right side) acts on the left end plate 14 from the first inclined surface 26 of the shaft 10. Consequently, the left end plate 14 can firmly hold the rotor core 12 from the left side. In this manner, the left end plate 14 can be fixed to the shaft 10 and the rotor core 12 by using the first inclined surface 26 of the shaft 10. Therefore, the structure for fixing the left end plate 14 to the shaft 10 and the rotor core 12 can be simplified.

In addition, the positioning of the rotor core 12 and the left end plate 14 in the direction of the axis A with respect to the shaft 10 can be realized by using the first inclined surface 26.

Further, with the above configuration, the rotor 2 need not include an additional member, a flange, or the like for fixing the left end plate 14 to the shaft 10 and the rotor core 12. In this manner, the structure for fixing the left end plate 14 to the shaft 10 and the rotor core 12 can be simplified.

Additionally, as shown in FIGS. 2 to 4, the shaft 10 is elastically deformed radially inward at least at the first inclined surface 26, and the restoring force caused by the elastic deformation acts on the left end plate 14.

With the above configuration, the restoring force acting on the left end plate 14 from the first inclined surface 26 of the shaft 10 or the frictional force caused by the restoring force can be increased.

Further, as shown in FIGS. 2 to 4, the left end plate 14 is elastically deformed radially outward at least at the inner peripheral surface 14A abutting the first inclined surface 26, and the amount of elastic deformation of the left end plate 14 increases as the distance from the rotor core 12 increases.

With the above configuration, in the left end plate 14, a restoring force on a side away from the rotor core 12 (that is, the left side) is larger than the restoring force on the right side. Therefore, the left end plate 14 can firmly hold the rotor core 12 from the left side.

In addition, as shown in FIG. 2, the diameter of the outer peripheral surface of the left end plate 14 is equal to the diameter of the outer peripheral surface of the rotor core 12.

With the above configuration, the left end plate 14 can firmly hold the rotor core 12 from the left side up to the radially outer end portion of the rotor core 12. Further, electromagnetic forces act on the electromagnetic steel sheets that constitute the rotor core 12. These electromagnetic forces may cause outer peripheral portions of the electromagnetic steel sheets to peel away. With the above configuration, the peeling of the electromagnetic steel sheets that constitute the rotor core 12 can be suppressed.

Additionally, as shown in FIG. 2, a left end edge of the inner peripheral surface 14A of the left end plate 14 is located on the first inclined surface 26 of the shaft 10.

With the above configuration, the restoring force acting on the left end plate 14 from the first inclined surface 26 of the shaft 10 or the frictional force caused by the restoring force can be increased as compared with a configuration in which the left end edge of the inner peripheral surface 14A of the left end plate 14 is located on the second outer peripheral surface beyond the first inclined surface 26 of the shaft 10.

Further, as shown in FIG. 2, the left end edge of the inner peripheral surface 14A of the left end plate 14 is located on the boundary between the second outer peripheral surface 24 and the first inclined surface 26 of the shaft 10.

With the above configuration, the area of the inner peripheral surface 14A of the left end plate 14 that is in contact with the first inclined surface 26 of the shaft 10 can be increased. As a result, the restoring force acting on the left end plate 14 from the first inclined surface 26 of the shaft 10 or the frictional force caused by the restoring force can be increased.

In addition, as shown in FIG. 2, the dimension L1 of the inner peripheral surface 14A of the left end plate 14 in the direction of the axis A is equal to the dimension L1 of the first inclined surface 26 of the shaft 10 in the direction of the axis A.

With the above configuration, the area of the inner peripheral surface 14A of the left end plate 14 that is in contact with the first inclined surface 26 of the shaft 10 can be maximized.

Moreover, as shown in FIG. 2, the rotor 2 further includes the right end plate 16 (an example of a "second end plate") fixed to the outer peripheral surface 20 of the shaft 10 and abutting the end face of the rotor core 12 on the right side (an example of a "second axial side"). The outer peripheral surface 20 of the shaft 10 includes the third outer peripheral surface 28 located on the right side with respect to the first outer peripheral surface 22 and having a diameter larger than the diameter of the first outer peripheral surface 22, and the second inclined surface 30 located between the first outer peripheral surface 22 and the third outer peripheral surface 28 in the direction of the axis A and abutting the inner peripheral surface 16A of the right end plate 16. The second inclined surface 30 has a diameter increasing from the first outer peripheral surface 22 toward the third outer peripheral surface 28.

With the above configuration, not solely the radial restoring force but also the restoring force in the direction of the axis A toward the rotor core 12 (that is, the left side) acts on the right end plate 16 from the second inclined surface 30 of the shaft 10. Consequently, the right end plate 16 can firmly hold the rotor core 12 from the right side. That is, the rotor core 12 is firmly held by both the left end plate 14 and the right end plate 16 from both sides in the direction of the axis A.

As shown in FIGS. 2 to 4, the manufacturing method of the rotor 2 includes a process of temporarily expanding the inner peripheral surface 12A of the rotor core 12 radially outward and fixing the rotor core 12 to the first outer peripheral surface 22 of the shaft 10, and a process of temporarily expanding the inner peripheral surface 14A of the left end plate 14 radially outward and fixing the left end plate 14 to the first inclined surface 26 of the shaft 10.

With the above configuration, the left end plate 14 can be fitted to the shaft 10 with an interference fit. Consequently, the restoring force acting on the left end plate 14 from the first inclined surface 26 of the shaft 10 or the frictional force caused by the restoring force can be increased. In particular, not solely the radial restoring force (reaction force) but also the restoring force in the direction of the axis A toward the rotor core 12 (that is, the right side) acts on the left end plate 14 from the first inclined surface 26 of the shaft 10. Therefore, the left end plate 14 can firmly hold the rotor core 12 from the left side.

In addition, as shown in FIGS. 2 to 4, a process of fixing the left end plate 14 is performed after a process of fixing the rotor core 12.

With the above configuration, various parameters (for example, temperature) can be appropriately set in each of the process of fixing the left end plate 14 and the process of fixing the rotor core 12.

Although specific examples of the technology disclosed in the present specification have been described in detail above, these examples are merely illustrative and do not limit the scope of the claims. The technology described in the claims includes various modifications and changes of the specific examples exemplified above.

### First Modification Example

The outer peripheral surface 20 of the shaft 10 need not include any one of the first inclined surface 26 and the second inclined surface 30. As an example, in a case where the outer peripheral surface 20 of the shaft 10 does not include the second inclined surface 30, the outer peripheral surface 20 of the shaft 10 need only include a flange portion located on the right side of the first outer peripheral surface 22. In this case, the rotor core 12 is held by the left end plate 14 that abuts the first inclined surface 26 and the flange portion from both sides in the direction of the axis A.

### Second Modification Example

In a state before the left end plate 14 and the right end plate 16 are fixed to the shaft 10, the shapes of the inner peripheral surfaces 14A, 16A of the left end plate 14 and the right end plate 16 may have shapes corresponding to the shapes of the first inclined surface 26 and the second inclined surface 30 of the shaft 10, respectively. That is, the inner peripheral surface 14A of the left end plate 14 before being fixed to the shaft 10 may have a diameter increasing from the first outer peripheral surface 22 toward the second outer peripheral surface 24. In addition, the inner peripheral surface 16A of the right end plate 16 before being fixed to the shaft 10 may have a diameter increasing from the first outer peripheral surface 22 toward the third outer peripheral surface 28.

### Third Modification Example

The diameter of the outer peripheral surface of the left end plate 14 may be larger than the diameter of the outer peripheral surface of the rotor core 12. In another modification example, the diameter of the outer peripheral surface of the left end plate 14 may be smaller than the diameter of the outer peripheral surface of the rotor core 12.

### Fourth Modification Example

The left end edge of the inner peripheral surface 14A of the left end plate 14 may be located on the second outer peripheral surface 24. Alternatively, in another modification example, the left end edge of the inner peripheral surface 14A of the left end plate 14 may be located on the right side with respect to the boundary between the second outer peripheral surface 24 and the first inclined surface 26.

### Fifth Modification Example

The left end edge of the inner peripheral surface 14A of the left end plate 14 may be located on the right side with respect to the boundary between the first inclined surface 26 and the first outer peripheral surface 22.

### Sixth Modification Example

The dimension of the inner peripheral surface 14A of the left end plate 14 in the direction of the axis A may be longer or shorter than the dimension of the first inclined surface 26 of the shaft 10 in the direction of the axis A.

### Seventh Modification Example

In the manufacturing method of the rotor 2, the process of fixing the left end plate 14 and the process of fixing the rotor core 12 may be executed at the same time.

Additionally, the technical elements described in the present specification or the drawings exhibit technical usefulness alone or in various combinations and are not limited to the combinations described in the claims at the time of filing. Moreover, the technology exemplified in the present specification or the drawings can achieve a plurality of objectives at the same time, and achieving one of the objectives has technical usefulness.

## Claims

1. A rotor of an electric motor, comprising:
a shaft (10) extending in an axial direction;
a rotor core (12) fixed to an outer peripheral surface of the shaft (10); and
a first end plate (14) fixed to the outer peripheral surface of the shaft (10) and abutting an end face of the rotor core (12) on a first axial side, wherein:
the outer peripheral surface of the shaft (10) includes
a first outer peripheral surface abutting an inner peripheral surface of the rotor core (12),
a second outer peripheral surface located on the first axial side with respect to the first outer peripheral surface and having a diameter larger than a diameter of the first outer peripheral surface, and
a first inclined surface located between the first outer peripheral surface and the second outer peripheral surface in the axial direction and abutting an inner peripheral surface of the first end plate (14); and
the first inclined surface has a diameter increasing from the first outer peripheral surface toward the second outer peripheral surface.

2. The rotor according to claim 1, wherein the shaft (10) is elastically deformed radially inward at least at the first inclined surface, and a restoring force caused by the elastic deformation acts on the first end plate (14).

3. The rotor according to claim 2, wherein:
the first end plate (14) is elastically deformed radially outward at least at the inner peripheral surface abutting the first inclined surface; and
an amount of the elastic deformation of the first end plate (14) increases as a distance from the rotor core (12) increases.

4. The rotor according to claim 1, wherein a diameter of an outer peripheral surface of the first end plate (14) is larger than a diameter of an outer peripheral surface of the rotor core (12), or equal to the diameter of the outer peripheral surface of the rotor core (12).

5. The rotor according to claim 1, wherein an end edge of the inner peripheral surface of the first end plate (14) on the first axial side is located on the first inclined surface of the shaft (10).

6. The rotor according to claim 5, wherein the end edge of the inner peripheral surface of the first end plate (14) on the first axial side is located on a boundary between the second outer peripheral surface and the first inclined surface of the shaft (10).

7. The rotor according to claim 6, wherein an axial dimension of the inner peripheral surface of the first end plate (14) is equal to an axial dimension of the first inclined surface of the shaft (10).

8. The rotor according to any one of claims 1 to 7, further comprising a second end plate (16) fixed to the outer peripheral surface of the shaft (10) and abutting an end face of the rotor core (12) on a second axial side, wherein:
the outer peripheral surface of the shaft (10) includes
a third outer peripheral surface located on the second axial side with respect to the first outer peripheral surface and having a diameter larger than the diameter of the first outer peripheral surface, and
a second inclined surface located between the first outer peripheral surface and the third outer peripheral surface in the axial direction and abutting an inner peripheral surface of the second end plate (16); and
the second inclined surface has a diameter increasing from the first outer peripheral surface toward the third outer peripheral surface.

9. A manufacturing method of a rotor of an electric motor, the rotor including a shaft (10) extending in an axial direction, a rotor core (12) fixed to an outer peripheral surface of the shaft (10), and a first end plate (14) fixed to the outer peripheral surface of the shaft (10) and abutting an end face of the rotor core (12) on a first axial side, the outer peripheral surface of the shaft (10) including a first outer peripheral surface, a second outer peripheral surface located on the first axial side with respect to the first outer peripheral surface and having a diameter larger than a diameter of the first outer peripheral surface, and a first inclined surface located between the first outer peripheral surface and the second outer peripheral surface in the axial direction and having a diameter increasing from the first outer peripheral surface toward the second outer peripheral surface, the manufacturing method comprising:
temporarily expanding an inner peripheral surface of the rotor core (12) radially outward and fixing the rotor core (12) to the first outer peripheral surface of the shaft (10); and
temporarily expanding an inner peripheral surface of the first end plate (14) radially outward and fixing the first end plate (14) to the first inclined surface of the shaft (10).

10. The manufacturing method according to claim 9, wherein fixing the first end plate (14) is performed after fixing the rotor core (12).
